## Europäisches Patentamt
## European Patent Office
## Office européen des brevets

(11) Publication number: **0 214 631**
**B1**

(12) **EUROPEAN PATENT SPECIFICATION**

(45) Date of publication of patent specification: **07.02.90**

(21) Application number: **86112321.4**

(22) Date of filing: **05.09.86**

(51) Int. Cl.⁵: **C 09 J 5/10**

(54) **Method for joining silicone elastomer coated fabrics.**

(30) Priority: **06.09.85 JP 196486/85**

(43) Date of publication of application:
**18.03.87 Bulletin 87/12**

(45) Publication of the grant of the patent:
**07.02.90 Bulletin 90/06**

(84) Designated Contracting States:
**BE DE FR GB IT**

(56) References cited:
**GB-A-2 141 377**
**US-A-4 117 027**
**US-A-4 478 895**

(73) Proprietor: **Toray Silicone Company, Ltd.**
**8, 2-chome Muro-machi Nihonbashi**
**Chuo-ku Tokyo 103 (JP)**

(72) Inventor: **Mikami, Ryuzo**
**2618 Abbot Road, Apt. J-9**
**Midland, MI (US)**
Inventor: **Shimmi, Hideo**
**535, Yamadabashi**
**Ichihara-shi Chiba Prefecture (JP)**
Inventor: **Suganuma, Noriyuki**
**6, 1-chome, Nishi Yushudai**
**Ichihara-shi Chiba Prefecture (JP)**

(74) Representative: **Spott, Gottfried, Dr. et al**
**Patentanwälte Spott und Puschmann**
**Sendlinger-Tor-Platz 11**
**D-8000 München 2 (DE)**

Courier Press, Leamington Spa, England.

## Description

The present invention describes a method for joining silicone elastomer-coated fabrics.

Silicone elastomer-coated fabrics have been used as electric-insulating materials, radiator sheets, diaphragms, sealing materials and duct hosing and their use as a medical material and clothing material has been proposed.

United States Patent Number 2,372,632, issued March 27, 1945 to Webb teaches a method of making a waterproof seam, as in a raincoat, that may use a heat-softenable tape in conjunction with a sewn seam. There is no suggestion of forming a seam that is not sewn as a beginning step in the method.

United States Patent Number 2,465,374, issued March 29, 1949 to Haman et al. teaches another method of seaming using sewing and an uncured thermoplastic composition tape. They teach that joining pieces together by sealing alone does not have adequate mechanical strength.

In United States Patent Number 3,346,441, issued October 10, 1967, Bird teaches that panels joined by bonding or adhesive are used in air-inflated structures, but that his method of forming a seam minimizes the stress concentration to give a more reliable seam. He teaches nothing as to how such joining is accomplished, particularly in regard to silicone elastomer coated fabrics, which are well known as being difficult to bond to.

As described in United States Patent Number 4,478,895 issued October 23, 1984 to Makami et al. the use of silicone elastomer-coated fabric as a building facing and as a tent or tarpaulin has recently been proposed.

However, with regard to its applications in construction, the use of silicone elastomer-coated fabric is limited by the fact that silicone elastomer-coated fabrics are difficult to join at the construction site.

The use of an adhesive consisting of a room temperature-curable silicone elastomer composition and sewing are known in the art as methods for joining silicone elastomer-coated fabrics. However, the former method requires 24 or more hours for curing while the latter method requires a long time for sewing at the site and the needle holes must be sealed after sewing. Due to this, each of these methods suffers from the problem of poor joining workability at the construction site.

A method for joining silicone elastomer coated fabrics first coats the elastomer surfaces to be joined with a thin film of thermoplastic organo-silicon-organic copolymer. A thin film of the same type of thermoplastic organosilicon-organic copolymer is then placed between the coated surfaces and the assembly is hot press adhered.

It is an object of this invention to provide a method of joining silicone elastomer-coated fabric in the field.

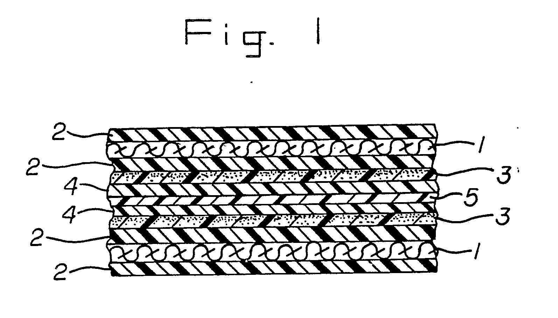

Figure 1 shows a cross section of a joint immediately before hot-pressing in the joining method of this invention.

This invention relates to a method for joining silicone elastomer-coated fabrics, characterized by inserting a thin film of thermoplastic organosilicon-organic copolymer between overlapping silicone elastomer-coated fabrics whose silicone elastomer surfaces have been coated with a thin film of thermoplastic organosilicon-organic copolymer of the same type as the aforementioned thin film, followed by hot pressing this assembly.

Various methods were examined by the present inventors in order to develop a method for joining silicone elastomer-coated fabrics which would have an excellent workability at the construction site and which would give a high bonding strength. This invention was developed as a result.

The silicone elastomer-coated fabric of the present invention may be acquired by coating a silicone elastomer composition on a fabric produced from any of various fibers, followed by curing under prescribed conditions.

Materials useable for the fabric include inorganic fibers such as glass fiber, carbon fiber, silicon carbide fiber and stainless steel fiber; synthetic fibers such as nylon, polyethylene terephthalate, polyacrylonitrile, polyvinyl alcohol, polypropylene, and polyvinylidene chloride; semisynthetic fibers such as acetate and rayon; and natural fibers such as cotton and flax, etc. The fabric types are weaves, knits and nonwovens. The fabric thickness is not particularly limited as long as the cloth is flexible. The fabric is shown in Figure 1 as 1.

The silicone elastomer composition coated on said fabric serves to impart water resistance, weather resistance, elasticity and strength and to prevent fraying of the fabric. It is shown in Figure 1 as 2.

The above silicone elastomer composition is principally composed of organopolysiloxane and curing agent and these compositions may be roughly classified into the following 3 types according to the organopolysiloxane curing reaction.

Addition-curable silicone elastomer compositions are principally composed of organopolysiloxane having silicon-bonded aliphatically unsaturated groups, organopolysiloxane having silicon-bonded hydrogen atoms and a platinum catalyst and they undergo crosslinking by the addition reaction of said aliphatically unsaturated groups with said hydrogen atoms. Radical-curing silicone elastomer compositions are principally composed of organopolysiloxane having silicon-bonded aliphatically unsaturated groups and organoperoxide and they undergo crosslinking by a cleavage reaction of said unsaturated groups. Finally, condensation-curable silicone elastomer compositions are principally composed of organopolysiloxane having silicon-bonded hydroxyl or hydrolyzable groups at the molecular terminals and silane or polysiloxane having on average greater than 2 silicon-bonded hydrolyzable or hydroxyl groups in each molecule.

These undergo crosslinking by a condensation reaction among said hydrolyzable and hydroxyl groups.

Other than the above components, reinforcing fillers are advantageously added to the silicone elastomer composition. Other components which may be present in the silicone elastomer composition are, for example, extender fillers, thermal stabilizers, flame retardants, pigments, addition-reaction retarders, condensation reaction-accelerating catalysts and plasticizers. These compositions are known in the art.

The fabric can be coated with the silicone elastomer composition by calendering, knife coating, brush coating, dip coating and spraying, followed by curing at room temperature, or possibly with heating, the method is being known in the art.

A thin film of thermoplastic organosilicon-organic copolymer is applied to said silicone elastomer surface of the silicone elastomer-coated fabric, shown as 4 in Figure 1. Said copolymer thin film is not necessarily applied to the entire silicone elastomer surface, but may be applied at and around the parts which require joining. An adhesive is optionally used to bond the silicone elastomer to the thermoplastic organosilicon-organic copolymer thin film, shown in Figure 1 as 3. However, an adhesive will not be needed when the thermoplastic organo-silicon-organic copolymer adheres well to the silicone elastomer. Adhesives for the instant purpose include silicone pressure-sensitive adhesives, self-bonding condensation-curable silicone elastomer compositions and self-bonding addition-curable silicone elastomer compositions.

The thin film of thermoplastic organosilicon-organic copolymer may be applied to the silicone elastomer surface by, for example, thinly coating the silicone elastomer surface with the above-mentioned adhesive and then press-adhering a thin film of the thermoplastic organo-silicon-organic copolymer over this or alternatively, coating the silicone elastomer surface with a solution of this copolymer and evaporating the solvent. When the adhesive is curable, it must be adequately cured.

The thermoplastic organosilicon-organic copolymer to be used in the present invention is not particularly restricted as long as it is tack-free at room temperature and can be melted by heating. However, said thermoplastic organosilicon-organic copolymer should have an excellent durability and physical strength.

Preferred thermoplastic organosilicon-organic copolymers are exemplified by the polycarbonate-silicone copolymers described in U.S. Patents 4,117,027 issued September 26, 1978 to Johnson et al. and 4,027,072 issued May 31, 1977 to Molari; the silicone-styrene copolymers described in U.S. Patents 3,760,030 issued September 18, 1973 to Dean and 3,968,278 issued July 6, 1976; the silicone-polyester-polycarbonate copolymers described in U.S. Patent No. 3,994,498 and the diaminoalkyldiorgano-polysiloxane-diisocyanate copolymers described in Japanese Kokai Patent No. 60-12105 [85-12105], and illustrated in the Example. These patents show methods of making thermoplastic organosilicon-organic copolymers and the copolymers made.

A thin film of the same type of thermoplastic organosilicon-organic copolymer, but prepared separately, is inserted between the silicon elastomer-coated fabrics whose surfaces are now coated with said thermoplastic organo-silicon-organic copolymer shown, as 5 in Figure 1. This assembly is then hot press-adhered in order to melt and mix the thermoplastic organosilicon-organic copolymer thin films with each other. When the resulting composite is cooled, it will have a unified thermoplastic organosilicon-organic copolymer layer.

The heat-treatment method is not particularly restricted and is exemplified by heat treatment using an electric smoothing iron and high-frequency heating. The heat-treatment temperature in hot press-adhesion should be equal to or higher than the softening point of the thermoplastic organosilicon-organic copolymer used. The thin film of thermoplastic organosilicon-organic copolymer which is to be inserted between the silicone elastomer-coated fabrics can be produced by casting a solution of said copolymer. Alternatively, the copolymer may be melted by heating to temperatures equal to or higher than the melting point and then thinly spread out and cooled. Also, the copolymer may be rolled at room temperature under elevated pressures. The shape of said thin film is appropriately selected in accordance with the shape of the silicone elastomer-coated fabrics to be joined. Generally, a tape is inserted between the edges of adjoining silicone elastomer-coated fabrics. The thickness of the thin film is desirably 0.01 to 1.0 mm.

The present invention is illustrated in the Example. "Part" in the reference example and example denotes "weight part". The viscosity and other physical values are measured at 25°C. The example should not be construed as limiting the invention, which is properly set forth in the appended claims.

Reference Example 1

(1) Synthesis of α,ω-diaminopropyldimethyl-polysiloxane-toluylene diisocyanate copolymer

A mixture of 50 parts of dry tetrahydrofuran and 10 parts α,ω-diaminopropyldimethylpolysiloxane (viscosity, 26.2 cS $(2.10^{-7} m^2/s)$; amino groups content, 1.87 weight percent) was placed in a four-neck flask equipped with a thermometer, nitrogen inlet tube, stirrer and reflux condenser.

A solution of 1.02 parts toluylene diisocyanate dissolved in 50 parts dry tetrahydrofuran was placed in the addition funnel and then gradually added dropwise into the tetrahydrofuran solution of α,ω - diaminopropyldimethylpolysiloxane-toluylene diisocyanate copolymer.

(2) Preparation of an α,ω-diaminopropyl-

dimethylpolysiloxane-toluylene diisocyanate copolymer thin film.

A room temperature-curable silicone resin mold-release agent (SR2411 from Toray Silicone Co., Ltd.) was coated on the 15 cm × 20 cm surface of a 15 cm × 20 cm × 0.5 cm glass plate and was then cured at 150°C for 30 minutes. A portion of the solution of α,ω-diaminopropyl-dimethylpolysiloxane-toluylene diisocyanate copolymer described at item (1) was cast on this glass plate coated with mold-release agent and this was then allowed to stand at room temperature for 15 hours in order to evaporate the solvent. A thin film was peeled from the glass plate: it was a transparent thin film of α,ω-diaminopropyldimethylpolysiloxane-toluylene diisocyanate copolymer (thickness, 100 μm), which was subsequently cut into a 3-cm-wide tape using a pair of scissors.

The thin film product had a softening point of approximately 175°C and a tensile strength of 72 kg/cm$^2$.

### Example 1

First, 100 parts of dimethylvinylsiloxy-terminated dimethylsiloxane-methylvinylsiloxane copolymer gum (methylvinylsiloxane unit content, 0.14 mol percent) was kneaded to homogeneity with 40 parts of wet-method silica with a specific surface area of 230 m$^2$/g, then 13.3 parts of a 50 weight percent paste of 2,4-dichlorobenzoyl peroxide was added, followed by kneading to homogeneity.

Sufficient xylene was added to the resulting mixture and this was stirred to homogeneity in order to produce a silicone elastomer composition having 30 weight percent solids).

A clean glass fiber woven fabric (plain weave; count: 18 × 17/25 mm; weight: 405 g/m$^2$; thickness, 0.37 mm) was immersed in the above silicone elastomer composition, removed, and gently wrung out with a mangle; then maintained in hot air at 70°C for 6 minutes to remove the xylene, and then maintained and vulcanized in hot air at 180°C for 20 minutes in order to obtain a silicone elastomer-coated glass fiber fabric.

The coated quantity of silicone elastomer was 205 g/m$^2$ and the overall thickness of the silicone elastomer-coated glass fiber weave was 0.80 mm. The hardness of the silicone elastomer itself was 50, Shore A.

A silicone pressure-sensitive adhesive (SH4280 from Toray Silicone Co., Ltd.) was spread as a thin film, with a thickness of 15 micrometres, on the surface of the silicone elastomer-coated glass fiber weave produced above.

The solution of α,ω-diaminopropyldimethylpolysiloxane-toluylene diisocyanate copolymer from Reference Example 1(1) was coated on the surface of the silicone elastomer-coated glass fiber weave which now bore a thin coating of the above-mentioned pressure-sensitive adhesive. Drying at room temperature gave a silicone elastomer-coated glass fiber fabric whose silicone elastomer surface had been coated with a 15 micrometre thin film of said copolymer via the intermediary of the pressure-sensitive adhesive.

The copolymer thin film tape of Reference Example 1(2) was inserted between the edges (3 cm overlap) of 2 of the silicone elastomer-coated glass fiber weaves now coated with copolymer thin film and obtained glass fiber weaves now coated with copolymer thin film and obtained as above as is shown in Figure 1. The resulting composite was press-adhered using an electric smoothing iron at 200°C for 3 minutes in order to unify and join the 3 members.

For comparison, the edges (3 cm overlap) of untreated silicone elastomer-coated glass fiber weaves were bonded to each other using a room temperature-curable silicone rubber adhesive (SH780 from Toray Silicone Co., Ltd.; thickness, 150 micrometres). The curing conditions in this case were 22°C for 7 days.

The bonding strength of the joined test pieces was measured by a 180° tensile test. The bonding strength of the example of this invention was 15 kg/cm$^2$ while the bonding strength of the comparison example was only 10 kg/cm$^2$.

These results demonstrate that the method of this invention gives an excellent bonding strength in a shorter joining operation time as compared with the method of the comparison example.

Registered trademarks are accordingly acknowledged.

### Claims

1. Method for joining silicone elastomer-coated fabrics, characterized by inserting a thin film of thermoplastic organosilicon-organic copolymer between overlapping silicone elastomer-coated fabrics whose silicone elastomer surfaces have been coated with a thin film of thermoplastic organosilicon-organic copolymer of the same type as the aforementioned thin film, followed by hot press-adhering this assembly.

2. A method for joining silicone elastomer-coated fabric consisting essentially of

(A) applying a thin film of thermoplastic organosilicon-organic copolymer over the surface of silicone elastomer-coated fabric, at least over the area to be joined,

(B) overlapping the edges of the silicone elastomer-coated fabric having the thin film of thermoplastic organosilicon-organic copolymer,

(C) inserting a thin film of thermoplastic organosilicon-organic copolymer of the same type as that used in step (A) into the space between the overlapping coated edges of step (B), and

(D) hot pressing the assembly to melt the thermoplastic organosilicon-organic copolymer films to form a unified thermoplastic organosilicon-organic copolymer layer,

(E) cooling the assembled joint, to give silicone elastomer-coated fabrics firmly joined together.

3. The method of claim 2 in which the thermo-

# EP 0 214 631 B1

plastic organosilicon-organic copolymer is a diaminopropyldimethylpolysiloxane-toluylene diisocyanate copolymer.

4. Pieces of silicone elastomer-coated fabric joined by the method of claim 1.

5. Pieces of silicone elastomer-coated fabric joined by the method of claim 3.

**Patentansprüche**

1. Verfahren zum Verbinden von mit einem Siliconelastomeren beschichteten Geweben, dadurch gekennzeichnet, daß ein dünner Film aus einem thermoplastischen Organosiliciumorganocopolymerisat zwischen überlappende und mit einem Siliconelastomeren beschichtete Gewebe eingefügt wird, deren Siliconelastomerberflächen mit einem dünnen Film aus einem thermoplastischen Organosiliciumorganocopolymerisat des gleichen Typs wie beim erwähnten dünnen Film beschichtet worden sind, und daß diese Anordnung dann durch Heißverpressen verschweißt wird.

2. Verfahren zum Verbinden von mit einem Siliconelastomeren beschichteten Geweben, dadurch gekennzeichnet, daß im wesentlichen folgende Maßnahmen angewandt werden:

(a) Aufbringung eines dünnen Films aus einem thermoplastischen Organosiliciumorganocopolymerisat auf die Oberfläche des mit einem Siliconelastomeren beschichteten Gewebes wenigstens aud die zu verbindende Fläche,

(B) Überlappung der Ränder des mit einem Siliconelastomeren beschichteten Gewebes, das mit dem dünnen Film aus einem thermoplastischen Organosiliciumorganocopolymerisat versehen ist,

(C) Einfügung eines dünnen Films aus einem thermoplastischen Organosiliciumorganocopolymerisat des gleichen Typs wie bei der Stufe (A) in den Zwischenraum zwischen den sich überlappenden und beschichteten Rändern gemäß Stufe (B),

(D) Heißverpressen der Anordnung unter Schmelzen der Filme aus dem jeweiligen thermoplastischen Organosiliciumorganocopolymerisat zwecks Bildung einer zusammenhängenden Schicht aus thermoplastischem Organosiliciumorganocopolymerisat und

(E) Abkühlung der verbundenen Anordnung unter Bildung von fest miteinander verbundenen und mit dem jeweiligen Siliconelastomeren beschichteten Geweben.

3. Verfahren nach Anspruch 2, dadurch gekennzeichnet, daß das thermoplastische Organo-siliciumorganocopolymerisat ein Diaminopropyl-dimethylpolysiloxan - Toluylendiisocyanat-Copolymerisat ist.

4. Stücke eines mit einem Siliconelastomeren beschichteten Gewebes, die nach dem Verfahren von Anspruch 1 miteinander verbunden sind.

5. Stücke eines mit einem Siliconelastomeren beschichteten Gewebes, die nach dem Verfahren von Anspruch 3 miteinander verbunden sind.

**Revendications**

1. Procédé pour unir des tissus enduits d'élastomère de silicone, caractérisé en ce qu'on introduit une pellicule mince de copolymère organosilicié-organique thermoplastique entre des tissus enduits d'élastomère de silicone se chevauchant, dont les surfaces portant l'élastomère de silicone ont été enduites d'une pellicule mince de copolymère organosilicié-organique thermoplastique du même type que la pellicule mince susmentionnée, puis on fait adhérer cet assemblage par pressage à chaud.

2. Un procédé pour unir du tissu enduit d'élastomère de silicone, consistant essentiellement à

(A) appliquer une pellicule mince d'un copolymère organosilicié-organique thermoplastique sur la surface du tissu enduit d'élastomère de silicone, au moins sur la zone de jonction,

(B) faire chevaucher les bords du tissu enduit d'élastomère de silicone portant la pellicule mince de copolymère organosilicié-organique thermoplastique,

(C) introduire une pellicule mince de copolymère organosilicié-organique thermoplastique du même type que celle utilisée dans l'étape (A) dans l'espace compris entre les bords enduits se chevauchant de l'étape (B), et

(D) presser à chaud l'assemblage pour fondre les pellicules de copolymère organosilicié-organique thermoplastique pour former une couche unifiée de copolymère organosilicié-organique thermoplastique,

(E) refroidir le joint assemblé, pour obtenir des tissus enduits d'élastomère de silicone solidement unis.

3. Le procédé de la revendication 2, dans lequel le copolymère organosilicié-organique thermoplastique est un copolymère diaminopropyl-diméthylpolysiloxane-diisocyanate de tolylène.

4. Pièces de tissu enduit d'élastomère de silicone unies par le procédé de la revendication 1.

5. Pièces de tissu enduit d'élastomère de silicone unies par le procédé de la revendication 3.

5

# Fig. 1